**Europäisches Patentamt**

**European Patent Office**

**Office européen des brevets**

(19)

(11) Veröffentlichungsnummer : **0 354 473 B1**

(12) ## EUROPÄISCHE PATENTSCHRIFT

(45) Veröffentlichungstag der Patentschrift :
03.02.93 Patentblatt 93/05

(51) Int. Cl.$^5$ : **C01B 33/26, C11D 3/12**

(21) Anmeldenummer : **89114340.6**

(22) Anmeldetag : **03.08.89**

(54) **Entfernung von Grobanteilen in wässrigen Alumosilikatsuspensionen durch Nassvermahlung.**

Verbunden mit 89908977.5/0428576
(europäische
Anmeldenummer/Veröffentlichungsnummer)
durch Entscheidung vom 11.02.92.

(30) Priorität : **11.08.88 DE 3827260**

(43) Veröffentlichungstag der Anmeldung :
**14.02.90 Patentblatt 90/07**

(45) Bekanntmachung des Hinweises auf die
Patenterteilung :
**03.02.93 Patentblatt 93/05**

(84) Benannte Vertragsstaaten :
**BE DE ES FR GB IT NL SE**

(56) Entgegenhaltungen :
**EP-A- 0 016 344
DE-A- 2 531 342
DE-A- 2 615 698
FR-A- 2 287 504
FR-A- 2 523 950**

(73) Patentinhaber : **Henkel
Kommanditgesellschaft auf Aktien
Henkelstrasse 67
W-4000 Düsseldorf 13 (DE)**

(72) Erfinder : **Just, Günther
Verdistrasse 48
W-4010 Hilden (DE)**

EP 0 354 473 B1

## Beschreibung

Die Erfindung betrifft ein Verfahren zur Entfernung von Grobanteilen in wäßrigen Alumosilikatsuspensionen, die feinverteilte wasserlösliche Alumosilikate mit gegen Calcium austauschenden Kationen enthalten, durch Naßvermahlung. Insbesondere betrifft die vorliegende Erfindung ein Naßmahlverfahren in kontinuierlichen Kugelmühlen, das es ermöglicht, die für den speziellen Anwendungszweck als Waschmittelbestandteil auch in sehr geringer Konzentration schädlichen Grobanteile über 50 μm in Alumosilikatsuspensionen praktisch vollständig zu zerkleinern, bei gleichzeitigem Erhalten des übrigen Kornspektrums.

Der Einsatz von Alumosilikaten und insbesondere von Zeolith A als Phosphatersatzstoff in Textilwaschmitteln hat sich trotz der Wasserunlöslichkeit bewährt. Voraussetzung für gute Waschergebnisse ist eine ausreichende Feinteiligkeit des Stoffes, die durch spezielle Synthesebedingungen erreicht werden kann. Eine in der Technik häufig geforderte Spezifikation ist hierbei, daß über 90 % der Teilchen eine Korngröße von weniger als 10 μm aufweisen sollen.

Eine besondere Bedeutung bei der Qualitätseinstufung von Zeolith A für Waschmittel hat der Gehalt an sogenanntem "Überkorn" über 50 μm, des sogenannten "Grits". Die Bestimmung des Gritgehalts erfolgt üblicherweise durch ein standardisiertes Naßsiebverfahren. Angestrebt werden im Stand der Technik Gritgehalte von weniger als 0,05 %, die jedoch synthesebedingt nicht immer eingehalten werden können. Geringe Anteile von Grit, die normalerweise in Alumosilikatsuspensionen vorhanden sind, bleiben auch mit Hilfe moderner Kornanalysen meist unentdeckt. Aber auch gering grithaltiger Zeolith-Einsatz in Waschmitteln ergibt regelmäßig eine Tendenz zu verschlechterten Waschergebnissen. Eine sichere Bestimmung eines solchen störenden Überkorns ist mit dem Mockergerät nach DIN 53 580 durchführbar. Das Prinzip der Gritbestimmung mit dem Mockergerät ist die Naßsiebung von Proben auf einem mit rotierenden Düsen besprühten Normsieb. Die Feinanteile werden durch das Prüfsieb gespült, während die Grobanteile auf dem Prüfsieb zurückbleiben und nach dem Trocknen ausgewogen werden. Zu hohe Gritwerte führen zu verschlechterten Rückstandswerten auf damit gewaschenen Textilien. Eine Möglichkeit der Verringerung der zu hohen Gritwerte besteht in der Absiebung, der Mahlung des Siebrückstandes und der anteiligen Rückvermischung. Derartige Verfahren sind jedoch außerordentlich aufwendig, insbesondere bei einem Durchsatz in der Größenordnung von 100 000 Jahrestonnen. Eine unmittelbare Mahlung erscheint für den Durchschnittsfachmann wenig erfolgversprechend, da die Erfahrung lehrt, daß bei großen Durchsatzmengen relativ zum absolut nur geringen Gehalt an Überkorn auch viel sogenanntes "Gutkorn", das die gewünschte Korngrößenverteilung aufweist, zerkleinert würde.

Im Stand der Technik sind verschiedene Verfahren zur Herstellung lagerstabiler, pumpbarer und fließfähiger Alumosilikatsuspensionen durch Naßvermahlung bekannt. Die hier einzusetzenden Alumosilikate mit Kationen, die zum Austausch von Calciumionen befähigt sind, sind aus der DE-A 24 12 836 und in der DE-A 24 12 838 als Phosphatersatzstoffe in Wasch- und Reinigungsmitteln bekannt. Bei der Konfektionierung von Wasch- und Reinigungsmitteln ist es bekanntermaßen zweckmäßig, diese Alumosilikate in Form von relativ hoch konzentrierten Suspensionen, sogenannten "Slurries" zu handhaben, da die vorherige Trocknung der Alumosilikate wegen der zusäztlichen Trocknungskosten wirtschaftlich nicht günstig wäre. In der DE-A 24 12 837 wird ausgeführt, daß man in gröberem Zustand anfallende Alumosilikate auf die gewünschte Korngröße mahlen kann. Hierzu eignen sich z.B. Mühlen und/oder Windsichter. Gemäß der DE-A 24 12 837 wird der Alumosilikatrückstand in einer Kugelmühle gemahlen und in einem Fliehkraftsichter in zwei Fraktionen getrennt, von denen die feinere keine Anteile oberhalb von 10 μm enthält.

Die DE-A 27 44 784 betrifft ebenfalls die Herstellung von Alumosilikaten und insbesondere die Herstellung bon Zeolith A. Hier wird ausgeführt, daß man - um ein Produkt bestimmter Korngrößenverteilung zu erhalten - das vorliegende Produkt auf die gewünschte Korngröße mahlen kann. Es wird ferner betont, daß die Erzielung bestimmter Teilchenverteilung durch Mahlen erfolgen kann und hierzu auf die DE-A 12 18 415 verwiesen. Auch wenn in der DE-A 27 44 784 Korngrößenverteilungen angegeben sind, so ist jedoch dieser Druckschrift kein Hinweis auf die Entfernung von Überkorn zu entnehmen.

In der DE-A 12 18 514 wird ausführlich die Feinmahlung kristalliner Zeolithe beschrieben. Hierbei handelt es sich um eine Feinmahlung bis auf mittlere Teilchengrößen unter 3 μm, die eine entsprechend lange Vermahlzeit erfordert.

Gegenstand der EP-B 16 344 ist ein Verfahren zur Herstellung von Alumosilikatsuspensionen, die lagerstabil, pumpbar und fließfähig sind, ohne daß Dispergier- und Stabilisierhilfsmittel erforderlich sind, durch Naßvermahlung der Alumosilikate. Zur Naßvermahlung werden hier gängige Apparaturen wie Kugelmühlen, Rührwerksmühlen oder Rotormühlen empfohlen, wobei Teilchengrößen von im Mittel 1 bis 10 μm resultieren.

Die DE-A 26 15 689 beschreibt fließfähige, pumpbare und lagerfähige Suspensionen mit einem Gehalt von wenigstens 30 % an Alumosilikat, sowie zusätzlich Dispergiermittel und Stabilisierungshilfsmittel. Die Alumosilikatteilchen der Suspension können im wesentlichen eine Teilchengröße zwischen 1 und 30 μm aufweisen.

2

Demgegenüber besteht die Aufgabe der vorliegenden Erfindung darin, den Anteil an sogenannten "Überkorn" einer Alumosilikatsuspension praktisch vollständig zu reduzieren.

Überraschenderweise wurde gefunden, daß beim raschen Passieren einer konzentrierten, stabilisierten Alumosilikatsuspension (Master-Batch) durch eine kontinuierlich zu betreibende Rührwerkskugelmühle der unerwünschte Grit-Anteil praktisch vollständig abgebaut wird, während das übrige Teilchenspektrum keine merkliche Veränderung erfährt.

Die Erfindung betrifft somit ein Verfahren zur Entfernung von Grobanteilen in wäßrigen Alumosilikatsuspensionen, die - bezogen auf die Suspension - 20 bis 60 Gew.-% an feinverteilten wasserunlöslichen Alumosilikaten mit gegen Calcium austauschbaren Kationen sowie Dispergiermittel und/oder Stabilisierungshilfsmittel enthalten, durch Naßvermahlung der Alumosilikate, dadurch gekennzeichnet, daß man die Alumosilikatsuspension durch kontinuierlich zu betreibende Rührwerkskugelmühlen passieren läßt und im Verlauf von weniger als 30 sec auf eine Korngrößenverteilung mit einem Anteil von weniger als 0,01 Gew.% bei einer Korngröße von 50 $\mu$m oder mehr und von weniger als 0,2 Gew.% bei einer Korngröße von 25 $\mu$m oder mehr vermahlt.

Bei den kontinuierlich zu betreibenden Rührwerkskugelmühlen handelt es sich um im Handel erhältliche vertikal und/oder horizontal arbeitende Rührwerkskugelmühlen, die bis zu 90 % ihres Volumens mit Kugeln kleinen Durchmessers, insbesondere 0,5 bis 3 mm aus Glas, Keramik, Korund und anderen harten Materialien oder Stahl gefüllt sind. Insbesondere bevorzugt im Sinne der vorliegenden Erfindung ist ein Durchmesser der Kugeln der Rührwerkskugelmühlen im Bereich von 2 bis 3 mm.

In einer bevorzugten Ausführungsform bringt die sich schnell drehende Rührwelle mit mehreren aufgesetzten Rührscheiben die Kugelmasse in Bewegung. Zwischen den bewegten Kugeln findet beim Durchpumpen der Suspension der Mahlvorgang statt. Ein wesentliches Kennzeichen der vorliegenden Erfindung ist somit der außerordentlich hohe Produktdurchsatz, der an der oberen Grenze der Durchsatzkapazität der Rührwerkskugelmühle eingestellt wird.

Bekanntermaßen haben auch die hydrothermalen Synthesebedingungen auf die Grit-Bildung einen besonderen Einfluß. Daher war es im Stand der Technik bisher nicht möglich, mit erhöhten Ansatzkonzentrationen zu arbeiten, da eine erhöhte Grit-Bildung auftrat, obwohl andererseits durch erhöhte Raum/Zeit-Ausbeute die Wirtschaftlichkeit verbessert werden könnte. Mit Hilfe der vorliegenden Erfindung lassen sich demnach praktisch Grit-freie Ansätze wirtschaftlicher herstellen.

Aus waschtechnischen Untersuchungen war bekannt, daß das Vorhandensein von Grit im Waschmittel auch in kleinsten Mengen absolut schädlich ist. Nominell werden erfindungsgemäß Teilchen über 50 $\mu$m als Grit erfaßt, doch machen sich auch kleinere Teilchen noch störend bemerkbar.

Ein einzelnes Grit-Korn besteht aus einem Agglomerat von mehreren tausend Einzelkristalliten von jeweils 1 bis 2 $\mu$m. Der Zusammenhalt der Einzelkristallite ist so fest, daß die üblichen Operationen bei Herstellung, Verarbeitung und Anwendung diesen nicht merklich beeinträchtigen.

In einer bevorzugten Ausführungsform der vorliegenden Erfindung wird die Alumosilikatsuspension auf eine Korngröße mit einem Anteil von < 0,01 Gew.% bei einer Korngröße von 50 $\mu$m oder mehr und von < 0,1 Gew.% bei einer Korngröße von 25 $\mu$m oder mehr vermahlen.

Eine weitere Ausführungsform der vorliegenden Erfindung besteht darin, daß man die Verweilzeit in der Rührwerkskugelmühle so weit verkürzt, daß eine Verweilzeit in der Rührwerkskugelmühle von 10 bis 20 sec besonders bevorzugt ist.

Erfindungsgemäß einzusetzende Alumosilikatsuspensionen enthalten in allen Ausführungsformen der vorliegenden Erfindung Dispergiermittel und/oder Stabilisierungshilfsmittel. Derartige Dispergiermittel und Stabilisierungshilfsmittel sind in der DE-A 26 15 698 beschrieben und können im wesentlichen aus folgenden Verbindungen ausgewählt werden:

Dispergiermittel:

1. Organische, makromolekulare, Carboxyl- und/oder Hydroxylgruppen aufweisende Polymerverbindungen

2. Phosphonsäure, die wenigstens eine weitere Phosphonsäure- und /oder Carboxylgruppe aufweisen,

3. Phosphonsäurealkylester-Emulgatoren mit 3 bis 20 C-Atomen in der Alkylkette,

4. nichtionische Tenside, die einen Trübungspunkt in wäßriger Butyldiglykollösung, bestimmt nach DIN 53 917, unterhalb von 90 °C aufweisen,

5. oberflächenaktive Sulfonate und

6. quellfähige wasserlösliche Silikate mit Schichtstruktur
und

Stabilisierungshilfsmittel:

nichttensidische, organische oder anorganische, von zusätzlichen Phosphonsäuren und organisch gebundenen Phosphatgruppen freie, wasserlösliche Salze mit einem Molekulargewicht unter 1 000.

Diese sind in einer bevorzugten Ausführungsform in den Alumosilikatsuspensionen in einer Menge von
jeweils 0,2 bis 7 Gew.-% enthalten.

Die einzusetzenden Mengen sind auch der DE-A 26 15 698 zu entnehmen.

Beispiel 1

Eine stabilisierte feinteilige wäßrige Zeolith A-Suspension mit 51 % Feststoffgehalt und 0,11 % Anteilen
über 50 µm, sog. Grit, wird bei einem Durchsatz von 1 200 kg/h, entsprechend einer Verweilzeit von 15 sec in
der Mühle, durch eine kontinuierlich arbeitende Rührwerkskugelmühle mit folgenden Merkmalen durchgesetzt:

Mahlbehälter       15 l Inhalt, horizontal arbeitend,
Mahlkörper        Aluminiumoxid-Kugeln 3mm,
                   12,5 l Kugelfüllung (83 % Füllgrad)
Rührelement       mit Rührscheiben, 1 000 UpM
Produktaustritt    über Reibspalt.

Das aus der Mühle ausfließende Produkt ist schaumfrei und weist auf dem 50 µm-Sieb keinen nachweisbaren Grit-Gehalt auf. Die Korngrößenverteilung zwischen 1 bis 20 µm ändert sich durch die Mühlenpassage
nur geringfügig, wie aus der folgenden Aufstellung hervorgeht.

Korngrößenverteilung nach Coulter-Counter, Modell TA (Zahlenangaben in Prozent) :

|                    | < 2 µm | 2-5 µm | 5-10 µm | 10-20 µm |
|--------------------|--------|--------|---------|----------|
| Produkt, ungemahlen | 12     | 74     | 11      | 3        |
| Produkt, gemahlen   | 16     | 69     | 13      | 2        |

Beispiel 2 und Vergleichsbeispiele 1 bis 4

Zeolith A-Suspensionen, 48 %ig, aus der Produktion, dienten als Ausgangsmaterial für das Beispiel 2 und
die Vergleichsbeispiele 1 bis 4. Die Zeolith A-Suspension wies das in der Tabelle ausgewiesene Kornspektrum
und die angeführten Grit-Werte auf.

Beispiel 2

In einer Rührwerkskugelmühle gemäß Beispiel 1, die mit einer Verweilzeit von 15 sec in der Ausgangskonzentration betrieben wurde, wurde das in der Tabelle beschriebene Kornspektrum erreicht.

Vergleichsbeispiel 1

Entsprechend der Lehre des Beispiels 1 der EP-PS 16 344 wurde in einer Labormühle, entsprechend PE
075 - Volumen 0,75 l, Füllgrad 55 % Mahlkörper, Mahlkörper Glas 1 mm, 20 min bei einer Rührerumdrehungszahl von 1 200 UpM eine 40 %ige Zeolith A-Suspension im Verlauf von 20 min vermahlen. Die Tabelle gibt die
erhaltenen Werte wieder.

Vergleichsbeispiel 2

Das Vergleichsbeispiel 2 stellt eine Wiederholung der Maßnahmen das Vergleichsbeispiels 1 dar. Die
Kornanalyse und Grit-Werte sind der Tabelle zu entnehmen.

Vergleichsbeispiel 3

Das Vergleichsbeispiel 3 wurde entsprechend der EP-PS 16 344, Beispiel 2, durchgeführt, wobei eine 30
%ige Suspension eingesetzt wurde. Der Tabelle sind die erhaltenen Kornanalysen und Grit-Werte zu entnehmen.

Vergleichsbeispiel 4

Das Vergleichsbeispiel 4 beschreibt die Wiederholung des Vergleichsbeispiels 3. Die erhaltenen Kornanalysen und Grit-Werte sind der Tabelle zu entnehmen.

## Tabelle

### Kornanalyse und Grit-Werte in μm

| Beispiel | Korngröße | | | | | | | | |
| --- | --- | --- | --- | --- | --- | --- | --- | --- | --- |
| | $< 1$ | $1 - 2$ | $3 - 5$ | $5 - 10$ | $10 - 15$ | max. μm | $\bar{d}$ μm | Grit (%) 25 μm | Grit (%) 50 μm |
| Ausgangs-material | 3,1 | 9,7 | 32,9 | 36,6 | 2,4 | 3,6 | 4,6 | 0,37 | 0,13 |
| 2 | 3,2 | 9,9 | 34,0 | 33,8 | 1,6 | 3,2 | 4,3 | 0,00 | 0,00 |
| Vgl. 1 | 2,6 | 9,8 | 30,4 | 32,8 | 4,7 | 2,4 | 4,7 | 0,01 | 0,00 |
| Vgl. 2 | 2,0 | 10,2 | 23,7 | 33,6 | 10,1 | 2,4 | 5,5 | 0,00 | 0,01 |
| Vgl. 3 | 3,0 | 23,5 | 29,0 | 26,1 | | 1,5 | 3,7 | 0,00 | 0,00 |
| Vgl. 4 | 3,1 | 17,9 | 24,1 | 25,1 | 2,6 | 2,4 | 4,0 | 0,00 | 0,00 |

EP 0 354 473 B1

Bei den Mahlergebnissen sind keine wesentlichen Unterschiede zu registrieren, jedoch sind die Mahlleistungen bei Anwendung des erfindungsgemäßen Verfahrens deutlich verbessert. Bei Berücksichtigung der effektiven Verweilzeit und der leistungsbestimmenden Konzentration beträgt die Leistung gemäß der erfindungsgemäßen Verfahrensweise fast das 100fache gegenüber dem Vergleichsbeispiel 1 und fast das 130fache gegenüber dem Vergleichsbeispiel 3.

**Patentansprüche**

1. Verfahren zur Entfernung von Grobanteilen in wäßrigen Alumosilikatsuspensionen, die - bezogen auf die Suspension - 20 bis 60 Gew.-% an feinverteilten wasserunlöslichen Alumosilikaten mit gegen Calcium austauschbaren Kationen sowie Dispergiermittel und/oder Stabilisierungshilfsmittel enthalten, durch Naßvermahlung der Alumosilikate, dadurch gekennzeichnet, daß man die Alumosilikatsuspension durch kontinuierlich zu betreibende Rührwerkskugelmühlen passieren läßt und im Verlauf von weniger als 30 sec auf eine Korngrößenverteilung mit einem Anteil von weniger als 0,01 Gew.-% bei einer Korngröße von 50 μm oder mehr und von weniger als 0,2 Gew.-% bei einer Korngröße von 25 μm oder mehr vermahlt.

2. Verfahren nach Anspruch 1, dadurch gekennzeichnet, daß man auf eine Korngrößenverteilung mit einem Anteil von < 0,01 Gew.-% bei einer Korngröße von 50 μm oder mehr und von < 0,1 Gew.-& bei einer Korngröße von 25 μm oder mehr vermahlt.

3. Verfahren nach Ansprüchen 1 und 2, dadurch gekennzeichnet, daß die Verweilzeit in der Mühle 10 bis 20 sec beträgt.

4. Verfahren nach Anspruch 1 bis 3, dadurch gekennzeichnet, daß die Alumosilikatsuspension 0,2 bis 7 Gew.-% Dispergiermittel und/oder 0,2 bis 7 Gew.-% Stabilisierungshilfsmittel enthalten.

**Claims**

1. A process for the removal of grit from aqueous alumosilicate suspensions which, based on the suspension, contain from 20 to 60 % by weight finely divided, water-insoluble alumosilicates containing calcium-exchanging cations and also dispersants and/or stabilizing aids by wet grinding of the alumosilicates, characterized in that the alumosilicate suspension is passed through continuously operated stirred ball mills and is ground in less than 30 seconds to a particle size distribution in which less than 0.01 % by weight of the particles are 50 μm or larger in size and less than 0.2 % by weight of the particles are 25 μm or larger in size.

2. A process as claimed in claim 1, characterized in that the alumosilicate suspension is ground to a particle size distribution in which < 0.01 % by weight of the particles are 50 μm or larger in size and < 0.1 % by weight of the particles are 25 μm or larger in size.

3. A process as claimed in claims 1 and 2, characterized in that the residence time in the mill is from 10 to 20 seconds.

4. A process as claimed in claims 1 to 3, characterized in that the alumosilicate suspension contains 0.2 to 7 % by weight dispersants and/or 0.2 to 7 % by weight stabilizing aids.

**Revendications**

1. Procédé d'élimination de gros morceaux dans des suspensions aqueuses de silicates d'aluminium par broyage à l'eau de ces derniers, qui - rapportés à la suspension - contiennent de 20 à 60 % en poids de silicate d'aluminium insolubles dans l'eau et finement divisés avec des cations échangeables contre du calcium ainsi que des produits dispersants et des adjuvants de stabilisation, procédé caractérisé :
   - en ce qu'on fait passer la suspension de silicates d'aluminium dans un broyeur à boules à agitation en marche continue et en moins de 30 sec, on obtient par broyage une répartition granulométrique comportant une proportion inférieure à 0,01 % en poids en grandeurs de grains de 50 μm ou plus et

7

inférieure à 0,2 % en poids en grandeurs de grains de 25 μm ou plus.

2. Procédé selon la revendication 1, caractérisé :
   - en ce qu'on effectue le broyage avec une répartition granulométrique ayant une teneur < 0,01 % en poids en grandeur de grains de 50 μm ou plus et < 0,1 % en poids en grandeur de grains de 25 μm ou plus.

3. Procédé selon les revendications 1 ou 2, caractérisé :
   - en ce que le temps de séjour dans le broyeur est compris entre 10 et 20 sec.

4. Procédé selon les revendications 1 à 3, caractérisé :
   - en ce que la suspension de silicates d'aluminium contient de 0,2 à 7 % en poids de produit dispersant et/ou de 0,2 à 7 % en poids d'adjuvants de stabilisation.